# EUROPÄISCHE PATENTSCHRIFT

(11) **EP 4 409 697 B1**
(45) Veröffentlichungstag und Bekanntmachung des Hinweises auf die Patenterteilung: **05.11.2025**
(21) Anmeldenummer: 22785992.3
(22) Anmeldetag: 14.09.2022
(51) Int. Cl.: H01R 13/52, H01R 43/00

(54) **VERGUSSDICHTER RUNDSTECKVERBINDER**
POTTING-TIGHT ROUND PLUG CONNECTOR
CONNECTEUR À FICHE RONDE ÉTANCHE À L'EAU

(30) Priorität: 29.09.2021 LU 500701
(43) Veröffentlichungstag der Anmeldung: 07.08.2024
(73) Patentinhaber: Phoenix Contact GmbH & Co KG, 32825 Blomberg (DE)
(72) Erfinder: BORSNAK, Blaz, 71083 Herrenberg (DE); ININGER, Jan, 72770 Reutlingen (DE); RITTER, Holger, 75449 Wumberg (DE)
(86) Internationale Anmeldenummer: PCT/EP2022/075528
(87) Internationale Veröffentlichungsnummer: WO 2023/052128

(56) Entgegenhaltungen:
- EP-A1- 3 735 722
- DE-A1- 102009 021 594
- DE-A1- 102016 105 465

## Beschreibung

DE102009021594A1 offenbart einen Rundsteckverbinder des Standes der Technik. Die Erfindung betrifft einen Rundsteckverbinder mit einer Anschlussseite ausgebildet zur Anordnung an einem Ende einer Anordnung mehrerer Adern und einer Steckerseite ausgebildet zur Herstellung einer Verbindung mit einem korrespondierenden Gegenstecker, umfassend zumindest ein äußeres Gehäuseteil mit einer Vorzugslängsachse, einen mehrteiligen oder segmentierten Kontaktträger mit zumindest zwei separaten Kontaktträgerelementen oder zumindest zwei Kontaktträgersegmenten zur Aufnahme zumindest eines jeweiligen elektrischen Kontakts und ein Schirmelement, wobei das äußere Gehäuseteil einen sich entlang der Vorzugslängsachse von einem steckerseitigen Ende des äußeren Gehäuseteils zu einem anschlussseitigen Ende des äußeren Gehäuseteils durch das äußere Gehäuseteil erstreckenden inneren Hohlraum aufweist, der Kontaktträger in dem inneren Hohlraum angeordnet ist und zwischen dem anschlussseitigen Endes des Kontaktträgers und dem anschlussseitigen Ende des äußeren Gehäuseteils ein Freiraum als Teil des inneren Hohlraums des äußeren Gehäuseteils ausgebildet wird, sich ein oder mehrere Axialelemente des Schirmelements zumindest teilweise in axialer Richtung zwischen den Kontaktträgerelementen oder den Kontaktträgersegmenten des Kontaktträgers hindurch erstrecken, das Schirmelement in einem Bereich des anschlussseitigen Endes des Kontaktträgers außen um den Kontaktträger vollständig umläuft und zugleich eine innere Wandung des äußeren Gehäuseteils vollständig umlaufend kontaktiert und wenigstens zwischen den Kontaktträgerelementen oder den Kontaktträgersegmenten des Kontaktträgers und dem Schirmelement sowie zwischen den Kontaktträgerelementen oder den Kontaktträgersegmenten des Kontaktträgers und dem äußeren Steckergehäuse zumindest zum Freiraum hin offene Zwischenräume als Teil des inneren Hohlraums vorliegen.

Des Weiteren betrifft die Erfindung ein Verfahren zur Anordnung eines Rundsteckverbinders an einer Anordnung mehrerer Adern und eine Rundsteckverbinderanordnung umfassend eine Anordnung Adern und einen Rundsteckverbinder.

Insbesondere betrifft die Erfindung Rundsteckverbinder nach IEC 61076-2-109 oder IEC 61076-2-113. Dabei handelt es sich um genormte Rundsteckverbinder mit einer vorgegebenen Geometrie, Anzahl und räumlicher Anordnung von Kontakten. Derartige Rundsteckverbinder sind besonders geeignet für die Übertragung von Daten bei hohen Übertragungsfrequenzen. Aus dem Stand der Technik sind verschiedene Ausführungsformen in Kombination mit Kabeln, d. h., Anordnung an einem Ende eines Kabels, Adern bzw. Litzen, d. h., Anordnung an einem Ende einer Anzahl bzw. Anordnung einer oder mehrere separierter respektive vereinzelter Adern oder Litzen, oder Leiterplatten, d. h., Anordnung an bzw. auf einer Leiterplatte, bekannt.

Gattungsgemäße Rundsteckverbinder weisen typischerweise 6 bis 8 Kontakte auf. Durch die von der M12-Basis vorgegebene Grundgestalt solcher Rundsteckverbinder ist der Gestaltungsspielraum bei der Ausbildung eines entsprechenden Rundsteckverbinders aufgrund des sehr engen Bauraums stark eingeschränkt. Daraus resultieren sehr kleine Querschnitte der Adern oder Litzen (der elektrischen Leiter) korrespondierender mehradriger Kabel oder korrespondierender Anordnungen von mehreren Adern. Litzen mit sehr kleinen Querschnitten weisen eine hohe Empfindlichkeit für axiale Belastungen als auch Zugbelastungen auf und können schnell brechen und/oder reißen. Dies betrifft besonders die Verbindungszone, in der die Litzen eines mehradrigen Kabels oder einer Anordnung von mehreren Adern mit einem jeweiligen zugeordneten Kontakt eines gattungsgemäßen Rundsteckverbinders verbunden werden. Eine dauerhafte und regelmäßig nicht beschädigungsfrei und/oder zerstörungsfrei lösbare Verbindung zwischen den Litzen der Adern eines Kabels oder einer Anordnung mehrerer Adern und den Kontakten eines Rundsteckverbinders wird meist mittels plastischer Verformung zur Herstellung einer formschlüssigen Verbindung durch Bördeln, Quetschen, Kräuseln oder Falten (kurz als *Crimpen* zusammengefasst) hergestellt. An einem Ende der Adern eines mehradrigen Kabels oder einer Anordnung mehrerer Adern und damit an einem Ende des Kabels oder der Anordnung mehrerer Adern selbst wird dazu das die elektrischen Leiter bzw. Litzen außen umgebende Isolationsmaterial bzw. die Isolierhülle ein Stück weit entfernt und die Litzen freigelegt. Gegebenenfalls müssen dazu zunächst die Adern eines mehradrigen Kabels selbst in einem Bereich an einem Ende des Kabels freigelegt (Entfernung eines Stücks des Mantels des Kabels usw.) werden, damit die selbst Adern zugänglich sind. Bei einer Anordnung von mehreren Andern und insbesondere auch in dem Fall, dass lediglich eine einzelne Ader vorliegt, liegen die einzelnen Adern hingegen per se separiert bzw. vereinzelt vor. Nach Verbindung einer der Litzen einer Ader mit einem zugeordneten elektrischen Kontakt eines gattungsgemäßen Rundsteckverbinders liegt in der Regel auch danach ein Stück der elektrischen Leiter bzw. Litzen zwischen dem Kontakt und der Isolierhülle frei. Dort sind die Litzen vollkommen ungeschützt und dementsprechend besonders gefährdet.

Bei anderen Typen von Steckverbindern, etwa Steckverbindern nach dem Standard IEC 61076-2-101, wird - bis dahin - freier Raum in einer Umgebung des Übergangsbereichs von elektrischem Kontakt, frei liegenden Teilen der elektrischen Leiter bzw. Litzen der Adern eines mit dem Steckverbinder verbundenen Kabels oder einer mit dem Steckverbinder verbundenen Anordnung mehrerer Adern und Isolierhüllen der Adern vergossen. Bei solchen Steckverbindern wird in einem anschlussseitigen Bereich, also einem Bereich an dem Ende eines entsprechenden Steckverbinders, welches zur Ausbildung einer Verbindung mit einem Kabel bzw. Anordnung an einem Ende eines Kabels oder entsprechend Verbindung mit bzw. Anordnung an einem Ende einer Anordnung von mehreren Adern vorgesehen und ausgebildet ist, Vergussmasse appliziert, die zu einem Verguss erstarrt und/oder aushärtet. Besonders die vormals frei liegenden Teile der elektrischen Leiter bzw. Litzen der Adern des mit dem Steckverbinder verbundenen Kabels oder der Anordnung mehrerer Adern sind dann durch den Verguss sowohl vor axialen Belastungen als aus Querbelastungen adäquat geschützt. Dabei ist vorauszusetzen, dass ein entsprechender berandeter räumlicher Bereich vorhanden ist, in dem die zunächst wenigstens leidlich flüssige Vergussmasse appliziert (eingegossen etc.) werden kann und in diesem räumlichen Bereich bis zum Erstarren und/oder Aushärten verbleibt, gehalten wird oder dergleichen.

Bei den gattungsgemäßen Rundsteckverbindern ist ein vorstehend beschriebener anschlussseitiger Verguss jedoch nicht möglich. Dies ergibt sich aus Spalten respektive Zwischenräumen zwischen dem Schirmelement und den Isolierkörpern bzw. Kontaktträgerelementen oder Kontaktträgersegmenten, zusätzlich gegebenenfalls auch noch zwischen den Kontaktträgerelementen oder Kontaktträgersegmenten des Kontaktträgers und einem (äußeren) Gehäuseteil eines Rundsteckverbinders, in dessen Inneren (inneren Hohlraum) Kontaktträger und Schirmelement aufgenommen sind. Der wesentliche Unterschied zwischen Kontaktträgern mit Kontaktträgerelementen und mit Kontaktträgersegmenten ist dabei, dass Kontaktträger mit Kontaktträgerelementen alternativ auch als mehrere separate Kontaktträger angesehen werden können, da die Kontaktträgerelemente alle voneinander getrennt vorliegen, wohingegen bei einem Kontaktträger mit Kontaktträgersegmenten die Kontaktträgersegmente miteinander fest verbunden sind bzw. integral miteinander ausgebildet den Kontaktträger ausbilden. Die Verbindungen zwischen den Kontaktträgersegmenten eines segmentierten Kontaktträgers sind dabei jedoch zumeist auf wenige und räumlich eng begrenzte Stellen beschränkt, sodass sich zwischen den Kontaktträgersegmenten eines segmentierten Kontaktträgers freie räumliche Bereiche für ein Schirmelement bzw. die Axialelement(e) eines Schirmelements ergibt und sich das oder die Axialelemente des Schirmelements zumindest teilweise durch den oder die freien räumliche Bereiche zwischen den Kontaktträgersegmenten eines segmentierten Kontaktträgers hinein bzw. hindurch erstrecken kann oder können.

Aufgrund komplexer Geometrien von Kontaktträgerelementen oder Kontaktträgersegmenten bzw. von entsprechenden Kontaktträgern als Ganzes und korrespondierenden Schirmelementen gattungsgemäßer Rundsteckverbinder und unter Einbeziehung notwendiger Toleranzen lassen sich die Spalten und/oder Zwischenräume nicht vermeiden. Dies hätte bei einem Verguss wie in einem vorstehenden Abschnitt beschrieben zur Folge, dass anschlussseitig applizierte Vergussmasse durch die Spalten und/oder Zwischenräume in das Innere eines Rundsteckverbinders nicht nur hinein, sondern sogar hindurch bis auf die Verbindungsseite zum bzw. in das Steckergesicht des Rundsteckverbinders fließt/gelangt/sickern, dort dann erstarren und/oder aushärten und das Steckergesicht des Rundsteckverbinders irreparabel beschädigen (verschmutzen) würde.

Daher liegt der Erfindung die Aufgabe zugrunde, einen gattungsgemäßen Rundsteckverbinder vorzuschlagen, der einen anschlussseitigen Verguss des Rundsteckverbinders ohne Beschädigung des verbindungsseitigen Steckergesichts zur Ausbildung einer Zugentlastung für die elektrischen Leiter bzw. Litzen der Adern eines mit einem derartigen Rundsteckverbinder verbindbaren oder verbunden Kabels oder einer mit einem derartigen Rundsteckverbinder verbindbaren oder verbunden Anordnung mehrerer Adern ermöglicht.

Die Aufgabe wird erfindungsgemäß durch einen Rundsteckverbinder nach Anspruch 1, ein Verfahren zur Anordnung eines Rundsteckverbinders an einer Anordnung mehrerer Adern nach Anspruch 2 und einer Rundsteckverbinderanordnung nach Anspruch 3 gelöst.

Bei einem erfindungsgemäßen Rundsteckverbinder ist demnach vorgesehen, dass das Schirmelement im Bereich des anschlussseitigen Endes des Kontaktträgers radiale Auskragungen aufweist, die den Kontaktträger außenseitig vollständig beranden und den Freiraum und die Zwischenräume räumlich vollständig voneinander trennen. Da vorgesehen ist, dass der Kontaktträger aus zumindest zwei separaten Kontaktträgerelementen oder zumindest zwei Kontaktträgersegmenten gebildet wird, werden die Kontaktträgerelemente oder die Kontaktträgersegmente für sich jeweils ebenfalls, soweit aufgrund der Geometrie des Kontaktträgers bzw. der Kontaktträgerelemente oder Kontaktträgersegmente erforderlich, vollständig außenseitig berandet durch die radialen Auskragungen und zusätzlich der Kontaktträger als Ganzes. Als eine vollständige außenseitige Berandung der Kontaktträgerelemente oder der Kontaktträgersegmente und des Kontaktträgers als Ganzes sind insbesondere (etwa um die Vorzugslängsachse des äußeren Gehäuseteils) umlaufende radiale Auskragungen zu verstehen. Die Berandung ist vollständig, sofern die radialen Auskragungen alle Möglichkeiten für im Bereich des anschlussseitigen Freiraums applizierte Vergussmasse blockieren aus dem Freiraum in die Zwischenräume zu fließen/gelangen/sickern. Dann kann bei Applikation von Vergussmasse im anschlussseitigen Freiraum an einem derartigen Rundsteckverbinder keine Vergussmasse mehr in die Zwischenräume zwischen den Kontaktträgern und dem Schirmelement und/oder den Kontaktträgern bzw. den Kontaktträgersegmenten und dem äußeren Gehäuseteil eindringen. Infolgedessen kann auch keine Vergussmasse durch die Zwischenräume bis zur Verbindungsseite fließen/gelangen/sickern und das Steckergesicht eines erfindungsgemäßen Rundsteckverbinders irreparabel beschädigen (verschmutzen). Die radialen Auskragungen sind vorzugsweise integral mit dem Schirmelement ausgebildet. Begünstigter Weise sind die radialen Auskragungen in axialer Richtung dünn ausgebildet, um die Problematik hinsichtlich der Toleranzen von äußerem Gehäuseteil, Kontaktträger mit Kontaktträgern oder Kontaktträgersegmenten und Schirmelement in Kombination mit der komplexen Geometrie derartiger Rundsteckverbinder nicht weiter zu verkomplizieren und zugleich ein Eindringen von Vergussmasse aus dem anschlussseitigen Freiraum in die Zwischenräume wirksam zu verhindern.

Ein erfindungsgemäßes Verfahren zur Anordnung eines Rundsteckverbinders an einer Anordnung mehrerer Adern umfasst zumindest die Schritte:
a. Vorsehen einer Anordnung mehrerer Adern, wobei an den Enden der Adern der oder die jeweilige(n) elektrische(n) Leiter ein Stück weit freigelegt sind, und
   Vorsehen eines Rundsteckverbinders mit einer Anschlussseite ausgebildet zur Anordnung an einem Ende der Anordnung mehrerer Adern und einer Steckerseite ausgebildet zur Herstellung einer Verbindung mit einem korrespondierenden Gegenstecker,
   der Rundsteckverbinder umfassend zumindest ein äußeres Gehäuseteil mit einer Vorzugslängsachse, einen mehrteiligen oder segmentierten Kontaktträger mit zumindest zwei separaten Kontaktträgerelementen oder zumindest zwei Kontaktträgersegmenten zur Aufnahme zumindest eines jeweiligen elektrischen Kontakts und ein Schirmelement,
   wobei das äußere Gehäuseteil einen sich entlang der Vorzugslängsachse von einem steckerseitigen Ende des äußeren Gehäuseteils zu einem anschlussseitigen Ende des äußeren Gehäuseteils durch das äußere Gehäuseteil erstreckenden inneren Hohlraum aufweist,
   der Kontaktträger in dem inneren Hohlraum angeordnet ist und zwischen dem anschlussseitigen Endes des Kontaktträgers und dem anschlussseitigen Ende des äußeren Gehäuseteils ein Freiraum als Teil des inneren Hohlraums des äußeren Gehäuseteils ausgebildet wird,
   sich ein oder mehrere Axialelemente des Schirmelements zumindest teilweise in axialer Richtung zwischen den Kontaktträgerelementen oder den Kontaktträgersegmenten des Kontaktträgers hindurch erstrecken, das Schirmelement in einem Bereich des anschlussseitigen Endes des Kontaktträgers außen um den Kontaktträger vollständig umläuft und zugleich eine innere Wandung des äußeren Gehäuseteils vollständig umlaufend kontaktiert und wenigstens zwischen den Kontaktträgerelementen oder den Kontaktträgersegmenten des Kontaktträgers und dem Schirmelement sowie zwischen den Kontaktträgerelementen oder den Kontaktträgersegmenten des Kontaktträgers und dem äußeren Steckergehäuse zumindest zum Freiraum hin offene Zwischenräume als Teil des inneren Hohlraums vorliegen,
   und wobei das Schirmelement im Bereich des anschlussseitigen Endes des Kontaktträgers radiale Auskragungen aufweist, die den Kontaktträger außenseitig vollständig beranden und den Freiraum und die Zwischenräume räumlich vollständig voneinander trennen,
b. Verbinden der elektrischen Leiter einer jeweiligen Ader der Anordnung mehrerer Adernmit einem zugeordneten Kontakt des Rundsteckverbinders,
c. Vergießen des anschlussseitigen Freiraums des Rundsteckverbinders mit einer Vergussmasse derart, dass der Freiraum in radialer Richtung vollständig und in axialer Richtung wenigstens in einer Umgebung um das anschlussseitige Ende des Kontaktträgers derart ausgefüllt ist, dass wenigstens freiliegende Bereiche der elektrischen Leiter der Adern der Anordnung mehrerer Adern zwischen den elektrischen Kontakten des Rundsteckverbinders und dem äußeren Isoliermaterial der jeweiligen Ader vollständig von Vergussmasse umgeben sind.

Bei einer erfindungsgemäßen Rundsteckverbinderanordnung ist vorgesehen, dass der oder die jeweiligen elektrischen Leiter der Adern der Anordnung mehrerer Adern mit einem zugeordneten Kontakt des Steckverbinders verbunden sind und der anschlussseitige Freiraum des Rundsteckverbinders mit einer Vergussmasse derart vergossen ist, dass der Freiraum in radialer Richtung vollständig und in axialer Richtung wenigstens in einer Umgebung um das anschlussseitige Ende des Kontaktträgers derart ausgefüllt ist, dass wenigstens freiliegende Bereiche der elektrischen Leiter der Adern der Anordnung mehrerer Adern zwischen den elektrischen Kontakten des Rundsteckverbinders und dem äußeren Isoliermaterial der jeweiligen Ader vollständig von Vergussmasse umgeben sind. Vorzugsweise füllt die Vergussmasse bzw. der Verguss dabei den Freiraum in radialer Richtung bzw. in alle möglichen Querrichtungen (bezüglich der Vorzugslängsachse des äußeren Gehäuseteils) vollständig aus, d. h., im Querschnitt ist der Freiraum vollständig bis an eine innere umlaufenden Wandung des äußeren Gehäuseteils als äußere radiale Begrenzung des Freiraums ausgefüllt. In axialer Richtung (parallel zu der Vorzugslängsachse des äußeren Gehäuseteils) muss die Vergussmasse bzw. der Verguss den Freiraum nicht vollständig ausfüllen. Ein sich unmittelbar an die anschlussseitige Öffnung des äußeren Gehäuseteils/des Freiraums/des inneren Hohlraums des äußeren Gehäuseteils als Teilfreiraum des Freiraums/des inneren Hohlraums kann gegebenenfalls frei von Vergussmasse bzw. Verguss verbleiben, sofern die Schutzwirkung des Verguss wenigstens für die (ohne Applikation von Vergussmasse) frei liegenden Teile der elektrischen Leiter der Adern im Hinblick auf axiale Belastungen und/oder Zugbelastungen und daraus möglicherweise resultierende Beschädigung oder Zerstörung der elektrischen Leiter adäquat ist. Vorzugsweise schließt der Verguss weitere sich an die frei liegenden elektrischen Leiter anschließende Bereiche respektive Segmente der Adern ein, um die Adern verbessert an dem Rundsteckverbinder festzulegen und zu stabilisieren hinsichtlich axialer Belastungen und/oder Zugbelastungen.

Die Erfindung ist sowohl bei Rundsteckern mit Buchsenkontakten als auch bei Rundsteckern mit Stiftkontakten anwendbar.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigt
- Fig. 1: einen gattungsgemäßen Rundsteckverbinder aus dem Stand der Technik in einer Längsschnittansicht;
- Fig. 2: den gattungsgemäßen Rundsteckverbinder aus Figur 1 in einer Ansicht von Hinten;
- Fig. 3: eine Ausgestaltungsvariante eines erfindungsgemäßen Rundsteckverbinders in einer Längsschnittansicht;
- Fig. 4: den Rundsteckverbinder aus Figur 3 in einer Ansicht von Hinten; und
- Fig. 5: den Rundsteckverbinder aus den Figuren 3 und 4 in einer weiteren Längsschnittansicht mit Verguss.

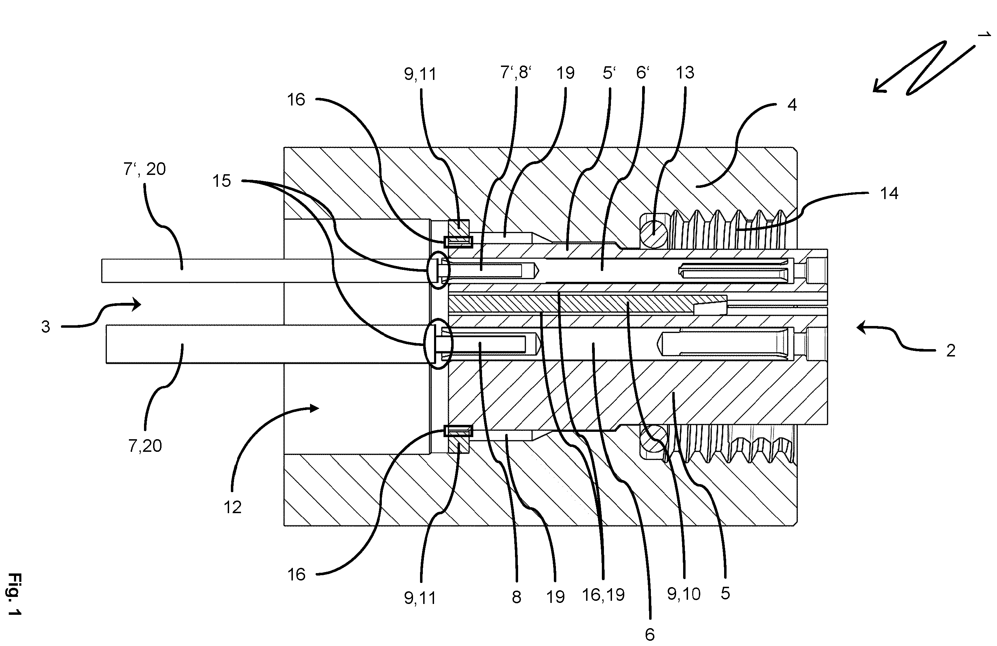

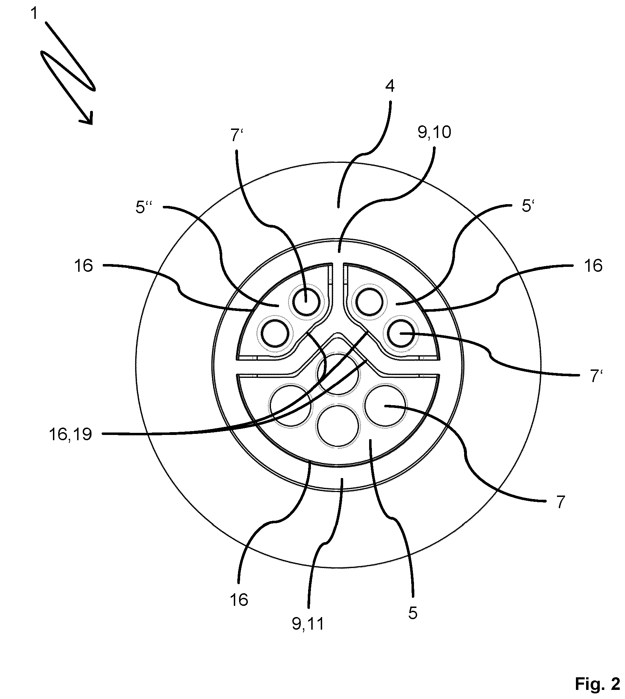

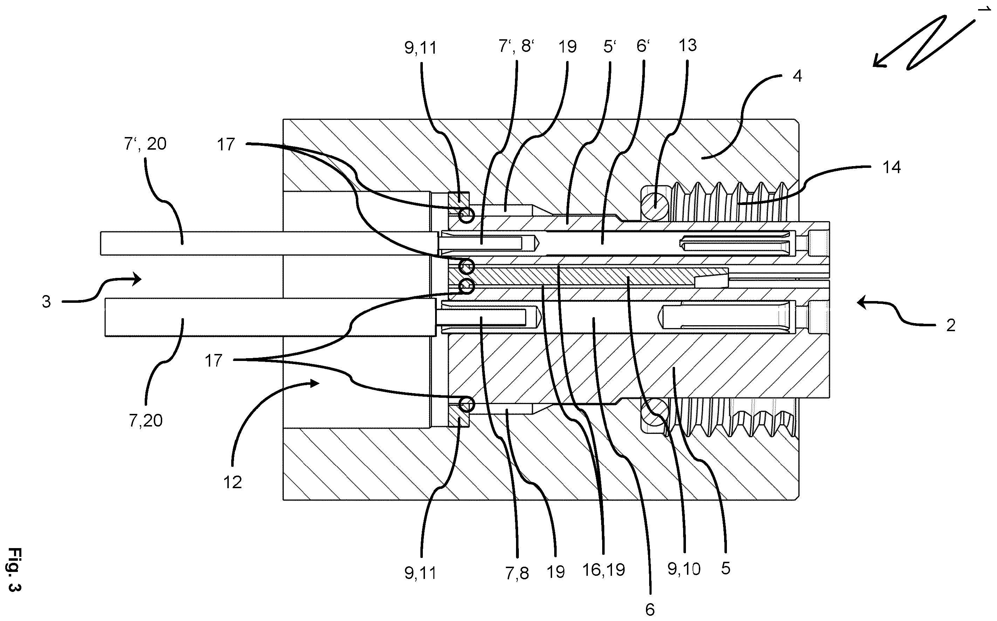

Die Figuren 1 und 2 zeigen einen gattungsgemäßen Rundsteckverbinder 1 aus dem Stand der Technik. Ein solcher Rundsteckverbinder kann gegebenenfalls weitere Elemente, Teile, Komponenten etc. aufweisen, die in den Figuren 1 und 2 der Einfachheit halber nicht dargestellt sind. Der Rundsteckverbinder 1 ist nach dem Standard IEC 61076-2-113 Typ 4 als Buchsenstecker, d. h., mit Buchsenkontakten 6, 6' zur Aufnahme korrespondierender Steckkontakte eines entsprechenden Gegensteckers, ausgebildet. Der gattungsgemäße Rundsteckverbinder 1 weist ein im äußeres Gehäuseteil 4 mit einer Vorzugslängsachse auf, wobei das äußere Gehäuseteil im Wesentlichen rotationssymmetrisch ausgebildet ist. Das äußere Gehäuseteil 4 weist einen sich entlang der Vorzugslängsachse komplett von dem steckerseitigen axialen Ende 2 bis zum anschlussseitigen axialen Ende 3 durch das äußere Gehäuseteil 4 erstreckenden inneren Hohlraum mit einer steckerseitigen wie auch eine anschlussseitigen Öffnung zum Außenraum auf, wobei der innere Hohlraum aus Gründen der Übersichtlichkeit in den Figuren nicht explizit referenziert ist. Das steckerseitige Ende 2 oder kurz die Steckerseite 2 des gattungsgemäßen Rundsteckverbinders 1 ist zur Herstellung einer Verbindung mit einem korrespondierenden Gegenstecker vorgesehen und der Rundsteckverbinder 1 in einer Umgebung um die Steckerseite 2 entsprechend ausgebildet. Zu diesem Zweck weist das äußere Gehäuseteil auf der Seite des steckerseitigen Endes 2 etwa ein Innengewinde 14 auf. Das anschlussseitige Ende 3 oder kurz die Anschlussseite 3 des Rundsteckverbinders 1 ist zur Ausbildung einer Verbindung mit einem Ende einer korrespondierenden der Anordnung mehrerer Adern, an der der Rundsteckverbinder 1 anordenbar ist, vorgesehen und der Rundsteckverbinder 1 ist in einer Umgebung um die Anschlussseite 3 entsprechend ausgebildet. In allen Figuren, also auch den weiteren Figuren 3 bis 5, ist der jeweils dargestellte Rundsteckverbinder 1/1' an einem Ende einer Anordnung mehrerer Adern angeordnet, wobei von der Anordnung mehrerer Adern lediglich Enden der schematisch angedeuteten Adern 7, 7'dargestellt sind. Die Adern 7, 7' können auch Teil eines mehradrigen Kabels sein, wobei an dem Ende, an dem der Rundsteckverbinder 1 an dem Kabel angeordnet werden soll, die Adern 7, 7' zumindest ein Stück weit freigelegt sind.

Im Inneren des inneren Hohlraums des äußeren Gehäuseteils 4 des gattungsgemäßen Rundsteckverbinders 1 sind drei einen Kontaktträger ausbildende separate Kontaktträgerelemente 5, 5', 5" mitsamt elektrischen Kontakten 6, 6' angeordnet und füllen einen größeren Teil des inneren Hohlraums vollständig aus. Insgesamt weist der Rundsteckverbinder 1 acht elektrische Kontakte 6, 6' auf, von denen je vier identisch sind. Die vier Kontakte 6 weisen dabei einen etwas größeren Querschnitt als die weiteren vier Kontakte 6' auf. Die vier Kontakte 6 sind allesamt in korrespondierenden, sich in axialer Richtung vollständig durch den Kontaktträger 5 hindurch erstreckenden Ausnehmungen (ohne Referenz in den Figuren) aufgenommen. Die weiteren vier Kontakte 6' verteilen sich paarweise auf die beiden weiteren, identisch ausgebildeten Kontaktträger 5 und 5' und sind dort ebenfalls in sich in axialer Richtung vollständig durch den jeweiligen Kontaktträger 5', 5" hindurch erstreckende korrespondierende Ausnehmungen (ohne Referenz in den Figuren) aufgenommen. Alle Kontakte 6, 6' stehen anschlussseitig ein kleines Stück weit aus dem jeweiligen Kontaktträger 5, 5', 5" heraus. Die Kontaktträger 5, 5', 5" bilden zusammen mit einem Schirmelement 9 eine gemeinsame Kernanordnung, also einen Kern 5, 5', 5", 9, des Rundsteckverbinders 1.

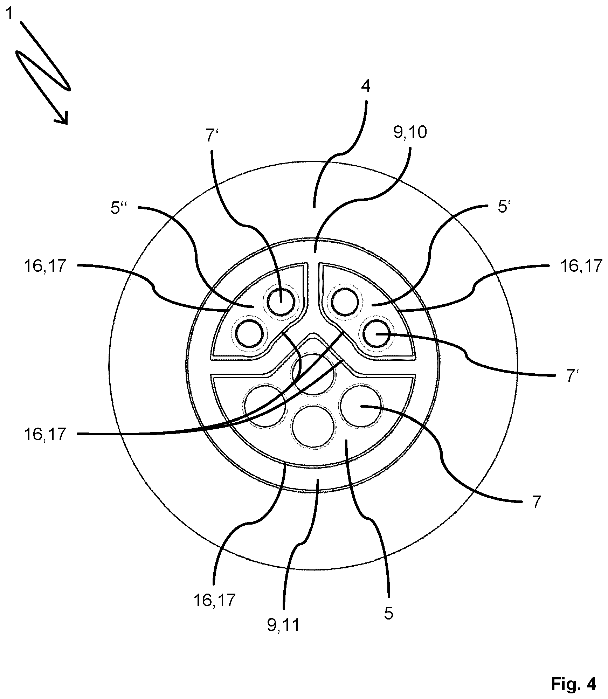

Das in einem Druckgussverfahren aus einem elektrisch leitfähigen (metallischen) Werkstoff hergestellte Schirmelement 9 weist dabei zwei integral (einteilig) miteinander ausgebildete Elemente auf: Ein Axialelement 10 und ein umgebendes Element 11. Das Axialelement 10 erstreckt sich vom anschlussseitigen Ende der Kontaktträgerelemente 5, 5', 5" in axialer Richtung zwischen den Kontaktträgern 5, 5', 5" hindurch in Richtung des steckerseitigen Endes. Die axiale Ausdehnung des Axialelements 10 ist dabei ist ein ganzes Stück weit kürzer als die der Kontaktträgerelemente 5, 5', 5", welche steckerseitig sogar etwas über das äußere Gehäuseteil 4 hinaus stehen. Im Querschnitt ist das Axialelement 10 von y-artiger Grundform. Auch wenn keine der Figuren einen gattungsgemäßen oder einen erfindungsgemäßen Rundsteckverbinder 1/1' im Querschnitt inklusive eines Querschnitts durch das Axialelement 10 zeigt, ist dies aus den Ansichten von Hinten bzw. auf das anschlussseitige Ende 3, wie in den Figuren 2 und 4 gezeigt, unmittelbar ersichtlich. An dem anschlussseitigen Ende der Kontaktträgerelemente 5, 5', 5" werden die Kontaktträgerelemente 5, 5', 5" von dem umgebenden Element 11 des Schirmelements 9 einmal umlaufend um die Vorzugslängsachse des äußeren Gehäuseteils 4 berandet. Das umgebende Element 11 erstreckt sich also entlang eines Kreises, der in einer Ebene senkrecht zu der Vorzugslängsachse des äußeren Gehäuseteils 4 des Rundsteckverbinders 1 um die Vorzugslängsachse umläuft.

Das umlaufende Element 11 weist ein rechteckiges Profil auf. An drei Stellen an dem inneren umlaufenden Rand des umgebenden Elements 11 schließt sich das Axialelement 10 des Schirmelements 9 an dem umgebenden Element 11 an, wobei, wie vorstehend bereits einmal angedeutet, das Schirmelement 9 einteilig bzw. das Axialelement 10 einteilig mit dem umgebenden Element 11 ausgebildet ist und zusammen das Schirmelement 9 bilden. Am äußeren umlaufenden Rand des umlaufenden Elements 11 ist dieses in Kontakt mit einer innen umlaufenden Wandung des inneren Hohlraums des äußeren Gehäuseteils 4. Die nach vorne, also zum steckerseitigen Ende 2 des äußeren Gehäuseteils bzw. des Rundsteckverbinders 1 als Ganzes weisende Ringfläche des umgebenden Elements 11 ist in Kontakt mit einer innenseitig umlaufendes sprunghaften Verjüngung des inneren Hohlraums des äußeren Gehäuseteils 4. Die Verjüngung wirkt als Anschlag und die Ringfläche als Gegenanschlag zur Festlegung des umlaufenden Elements 11 und dementsprechend des Schirmelements 9 als Ganzes in Richtung der Steckerseite 2.

Zwischen dem anschlussseitigen Ende des Kerns 5, 5', 5", 9 des Rundsteckverbinders 1 und dem anschlussseitigen Ende des äußeren Gehäuseteils 4 befindet sich ein anschlussseitig offener Freiraum 12 als Teil des inneren Hohlraums des äußeren Gehäuseteils 4. In den Freiraum 12 erstrecken sich von der Anschlussseite 3 her entlang der Vorzugslängsachse des äußeren Gehäuseteils 4 Adern 7, 7' einer Anordnung mehrerer Adern, an dem der Rundsteckverbinder 1 an einem Ende angeordnet ist, hinein. Entsprechend der Anzahl von acht Kontakten des Rundsteckverbinders 1 weist die Anordnung mehrerer Adern ebenfalls 8 Adern 7, 7' auf. Dabei sind je vier Adern 7 mit einem größeren und jeweils identischen Querschnitt den vier Kontakten 6 im Kontaktträgerelement 5 zugeordnet und je vier Adern 7' mit kleinerem und jeweils identischen Querschnitt den insgesamt vier Kontakten 6' in den beiden weiteren Kontaktträgerelementen 5, 5' zugeordnet sind. In einem endseitigen Bereich ist die Isolierhülle der Adern 7, 7' entfernt und die elektrischen Leiter/Litzen 8, 8' im Inneren der jeweiligen Ader 7, 7' freigelegt. Die Litzen 8, 8' einer jeweiligen Ader 7, 7' sind weitgehend in anschlussseitige und zumindest anschlussseitig offene Ausnehmungen (ohne Referenz in den Figuren) in dem jeweiligen zugeordneten Kontakt 6, 6' eingeführt, wobei die jeweiligen Kontakte 6, 6' und die Litzen 8, 8' einer zugeordneten Ader 7, 7' per Crimpen miteinander verbunden sind. In einem Übergangsbereich 15 erstreckt sich ein Bereich der Litzen 8, 8' zwischen dem äußersten anschlussseitigen Ende der Kontakte 6, 6' und dem Ende der jeweiligen Isolierhülle 20 der Adern 7, 7' frei durch den Raum. In diesem Bereich sind die Litzen 7, 7' besonders anfällig im Hinblick auf Beschädigung oder Zerstörung (Abriss) bei Zugbelastung der Adern 7, 7' bzw. eines Kabels mit den Adern 7, 7' als Ganzes, aber etwa auch im Hinblick auf (Ab-)Knicken (Bruch). Zudem sind die Adern 7, 7' im Bereich des Freiraums 12 zunächst in keiner Weise stabilisiert, fixiert oder dergleichen. Um die kritischen Übergangsbereiche 15 zu sichern, könnte der Freiraum 12 zumindest insoweit mit einer erstarrenden und/oder aushärtenden Vergussmasse (etwa Kunstharz) insoweit vergossen werden, als wenigstens die Übergangsbereiche 15 innerhalb des Verguss, also der erstarrten und/oder ausgehärteten Vergussmasse, liegen und somit geschützt sind.

Aufgrund der häufig komplexen Geometrien der gattungsgemäßen Rundsteckverbinder 1 wie in einer möglichen standardkonformen Ausführungsform in den Figu-ren 1 und 2 gezeigt und den notwendigen Toleranzen zwischen äußerem Gehäuseteil 4, dem Schirmelement 9 sowie den Kontaktträgerelementen 5, 5', 5" ist dies jedoch nicht möglich. Aufgrund der Toleranzen liegen diverse Spalte 16 zwischen dem Schirmelement 9 und den Kontaktträgerelementen 5, 5', 5" vor, durch die im Freiraum 12 applizierte Vergussmasse hindurch in im Inneren zwischen äußerem Gehäuseteil 4, dem Schirmelement 9 sowie den Kontaktträgerelementen 5, 5', 5" auch wiederum insbesondere wegen Toleranzen vorhandene Zwischenräume 19 eindringen kann (der Übergang zwischen Spalten 16 und Zwischenräumen 19 ist dabei fließend). Die Vergussmasse kann dabei auch in axialer Richtung vollständig durch die Zwischenräume 19 hindurch fließen/gelangen/sickern, auf der Steckerseite 2 aus den Zwischenräumen 19 austreten und dort das Steckergesicht des gattungsgemäßen Rundsteckverbinders 1 irreparabel beeinträchtigen.

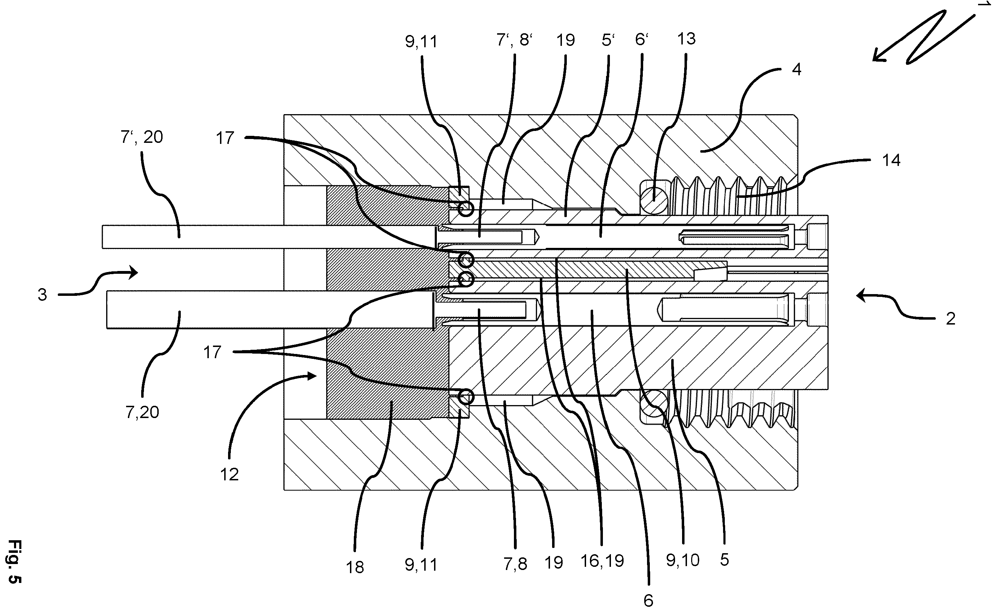

In den Figuren 3 bis 5 ist ein erfindungsgemäßer Rundsteckverbinder 1' in einer möglichen Ausgestaltungsvariante dargestellt. Bei dem Rundsteckverbinder 1' kann anschlussseitig im Freiraum 12 Vergussmasse appliziert werden, ohne dass Vergussmasse durch die Spalten 16 in die Zwischenräume 19 hinein und sogar hindurch bis auf den Steckerseite 2 fließen/gelangen/sickern kann. Der Steckverbinder 1' basiert weitestgehend auf dem gattungsgemäßen Rundsteckverbinder 1 entsprechend der Figuren 1 und 2, sodass auf eine erneute detaillierte Beschreibung des Rundsteckverbinders 1' verzichtet wird. Abweichend von dem gattungsgemäßen Rundsteckverbinder 1 weist das Schirmelement 9 des Rundsteckverbinders 1' radiale Auskragungen 17 auf. Die Auskragungen 17 liegen alle in einer Ebene senkrecht zu der Vorzugslängsachse, beranden die Kontaktträgerelemente 5, 5', 5" vollständig und sperren alle Spalten 16 in axialer Richtung. Die Auskragungen 17 trennen den Freiraum 12 damit räumlich vollständig von den Zwischenräumen 19 ab und blockieren einen Durchtritt von im Freiraum 12 applizierter Vergussmasse durch die Spalten 16 zwischen dem Schirmelement 9 und den Kontaktträgerelementen 5, 5', 5". Aufgrund der geringen axialen Ausdehnung der Auskragungen 17, etwa im Vergleich zu der axialen Ausdehnung des umgebenden Elements 11 des Schirmelements 9 mit den am innenseitigen umlaufenden Rand des umgebenden Elements 11 vorgesehenen Auskragungen 17, wird die Montage der einzelnen Bauelemente wie insbesondere Kontaktträger 5, 5', 5", Schirmelement 9 und äußeres Gehäuseteil 4 mit Blick auf die komplexe Geometrie derartiger Rundsteckverbinder 1' und der Toleranzen nicht weiter verkompliziert. Die Figuren 3 und 4 zeigen den Rundsteckverbinder 1' ohne, die Figur 5 mit Verguss 18 des Freiraums 12. Der Verguss 18 ist dabei in radialer Richtung bzw. in alle mögliche Querrichtungen (bezüglich der Vorzugslängsachse des äußeren Gehäuseteils 4) vollständig, d. h., im Querschnitt ist der Freiraum 12 vollständig bis an die innere umlaufende Wandung des äußeren Gehäuseteils 4 als äußere radiale Begrenzung des Freiraums 12 mit Verguss 18 ausgefüllt. In axialer Richtung füllt der Verguss 18 den Freiraum 12 nur teilweise aus, es verbleibt ein nicht vergossener Teilfreiraum im Bereich des anschlussseitigen Endes des äußeren Gehäuseteils 4. Der Verguss 18 schließt insbesondere den kritischen Übergangsbereich 15 (der Übersichtlichkeit halber explizit markiert nur in Figur 1 den gattungsgemäßen Rundsteckverbinder 1 betreffend) ein, wo die Litzen 8, 8' (ohne Verguss 18) der Adern 7, 7' frei liegen, ein. Zudem schließt der Verguss 18 auch noch weitere, sich daran anschließende Bereiche bzw. Segmente der Adern 7, 7' ein und stabilisiert bzw. fixiert die Adern 7, 7' im Hinblick auf axiale Belastungen und/oder Zugbelastungen zusätzlich. Des Weiteren dichtet der Verguss 18 den Rundsteckverbinder 1' anschlussseitig gegen Fremdkörper (insbesondere Staub) und Flüssigkeiten ab.

### Bezugszeichenliste

- 1, 1': Rundsteckverbinder
- 2: Steckerseite (Steckergesicht)
- 3: Anschlussseite
- 4: Äußeres Gehäuseteil
- 5, 5', 5": Kontaktträgerelement
- 6, 6': Kontakt
- 7, 7': Adern
- 8, 8': Litzen
- 9: Schirmelement
- 10: Axialelement
- 11: Umgebendes Element
- 12: Freiraum
- 13: Dichtung
- 14: Innengewinde
- 15: Übergangsbereich
- 16: Spalt
- 17: Radiale Auskragung
- 18: Verguss
- 19: Zwischenraum
- 20: Isolierhülle

## Patentansprüche

1. Rundsteckverbinder (1') mit einer Anschlussseite (3) ausgebildet zur Anordnung an einem Ende einer Anordnung von zumindest zwei Adern und einer Steckerseite (2) ausgebildet zur Herstellung einer Verbindung mit einem korrespondierenden Gegenstecker,
umfassend zumindest ein äußeres Gehäuseteil (4) mit einer Vorzugslängsachse, einen mehrteiligen oder segmentierten Kontaktträger mit zumindest zwei separaten Kontaktträgerelementen (5, 5', 5") oder zumindest zwei Kontaktträgersegmenten zur Aufnahme zumindest eines jeweiligen elektrischen Kontakts und ein Schirmelement (9),
wobei das äußere Gehäuseteil (4) einen sich entlang der Vorzugslängsachse von einem steckerseitigen Ende des äußeren Gehäuseteils (4) zu einem anschlussseitigen Ende des äußeren Gehäuseteils (4) durch das äußere Gehäuseteil (4) erstreckenden inneren Hohlraum aufweist,
der Kontaktträger in dem inneren Hohlraum angeordnet ist und zwischen dem anschlussseitigen Endes des Kontaktträgers und dem anschlussseitigen Ende des äußeren Gehäuseteils (4) ein Freiraum (12) als Teil des inneren Hohlraums des äußeren Gehäuseteils (4) ausgebildet wird,
sich ein oder mehrere Axialelemente (10) des Schirmelements (9) zumindest teilweise in axialer Richtung zwischen den Kontaktträgerelementen (5, 5', 5") oder den Kontaktträgersegmenten des Kontaktträgers hindurch erstrecken, das Schirmelement (9) in einem Bereich des anschlussseitigen Endes des Kontaktträgers außen um den Kontaktträger vollständig umläuft und zugleich eine innere Wandung des äußeren Gehäuseteils (4) vollständig umlaufend kontaktiert und wenigstens zwischen den Kontaktträgerelementen (5, 5', 5") oder den Kontaktträgersegmenten des Kontaktträgers und dem Schirmelement (9) sowie zwischen den Kontaktträgerelementen (5, 5', 5') oder den Kontaktträgersegmenten des Kontaktträgers und dem äußeren Steckergehäuse (4) zumindest zum Freiraum (12) hin offene Zwischenräume (19) als Teil des inneren Hohlraums vorliegen,
**dadurch gekennzeichnet, dass** das Schirmelement (9) im Bereich des anschlussseitigen Endes des Kontaktträgers radiale Auskragungen (17) aufweist, die den Kontaktträger außenseitig vollständig beranden und den Freiraum (12) und die Zwischenräume (19) räumlich vollständig voneinander trennen.

2. Verfahren zur Anordnung eines Rundsteckverbinders (1') an einer Anordnung von mehreren Adern , umfassend zumindest die Schritte:
a. Vorsehen einer Anordnung von mehreren Adern (7, 7'), wobei an den Enden der Adern (7, 7') der oder die jeweilige(n) elektrische(n) Leiter (8, 8')ein Stück weit freigelegt sind, und
Vorsehen eines Rundsteckverbinders (1') mit einer Anschlussseite (3) ausgebildet zur Anordnung an einem Ende der Anordnung von mehreren Adern und einer Steckerseite (2) ausgebildet zur Herstellung einer Verbindung mit einem korrespondierenden Gegenstecker,
der Rundsteckverbinder (1') umfassend zumindest ein äußeres Gehäuseteil (4) mit einer Vorzugslängsachse, einen mehrteiligen oder segmentierten Kontaktträger mit zumindest zwei separaten Kontaktträgerelementen (5, 5', 5) oder zumindest zwei Kontaktträgersegmenten zur Aufnahme zumindest eines jeweiligen elektrischen Kontakts (6, 6') und ein Schirmelement (9),
wobei das äußere Gehäuseteil (4) einen sich entlang der Vorzugslängsachse von einem steckerseitigen Ende des äußeren Gehäuseteils (4) zu einem anschlussseitigen Ende des äußeren Gehäuseteils durch das äußere Gehäuseteil (4) erstreckenden inneren Hohlraum aufweist, der Kontaktträger in dem inneren Hohlraum angeordnet ist und zwischen dem anschlussseitigen Endes des Kontaktträgers und dem anschlussseitigen Ende des äußeren Gehäuseteils (4) ein Freiraum (12) als Teil des inneren Hohlraums des äußeren Gehäuseteils (4) ausgebildet wird,
sich ein oder mehrere Axialelemente (10) des Schirmelements (9) zumindest teilweise in axialer Richtung zwischen den Kontaktträgerelementen (5, 5', 5") oder den Kontaktträgersegmenten des Kontaktträgers hindurch erstrecken, das Schirmelement (9) in einem Bereich des anschlussseitigen Endes des Kontaktträgers außen um den Kontaktträger vollständig umläuft und zugleich eine innere Wandung des äußeren Gehäuseteils (4) vollständig umlaufend kontaktiert und wenigstens zwischen den Kontaktträgerelementen (5, 5', 5") oder den Kontaktträgersegmenten des Kontaktträgers und dem Schirmelement (9) sowie zwischen den Kontaktträgerelementen (5, 5', 5") oder den Kontaktträgersegmenten des Kontaktträgers und dem äußeren Steckergehäuse (4) zumindest zum Freiraum (12) hin offene Zwischenräume (19) als Teil des inneren Hohlraums vorliegen,
und wobei das Schirmelement (9) im Bereich des anschlussseitigen Endes des Kontaktträgers radiale Auskragungen (17) aufweist, die den Kontaktträger außenseitig vollständig beranden und den Freiraum (12) und die Zwischenräume (19) räumlich vollständig voneinander trennen,
b. Verbinden der elektrischen Leiter (8, 8') einer jeweiligen Ader (7, 7') der Anordnung mehrerer Adern mit einem zugeordneten Kontakt (6, 6') des Rundsteckverbinders (1'),
c. Vergießen des anschlussseitigen Freiraums (12) des Rundsteckverbinders (1') mit einer Vergussmasse derart, dass der Freiraum (12) in radialer Richtung vollständig und in axialer Richtung wenigstens in einer Umgebung um das anschlussseitigen Ende des Kontaktträgers derart ausgefüllt ist, dass wenigstens freiliegende Bereiche (15) der elektrischen Leiter (8, 8') der Adern (7, 7') der Anordnung mehrerer Adern zwischen den elektrischen Kontakten (6, 6') des Rundsteckverbinders (1') und der Isolierhülle (20) der jeweiligen Ader (7, 7') vollständig von Vergussmasse umgeben sind.

3. Rundsteckverbinderanordnung, umfassend eine Anordnung mehrerer Adern und einen Rundsteckverbinder (1') nach Anspruch 1, **dadurch gekennzeichnet, dass** der oder die jeweiligen elektrischen Leiter (8, 8') der Adern (7, 7') der Anordnung mehrerer Adern mit einem zugeordneten Kontakt (6, 6') des Steckverbinders (1') verbunden sind und der anschlussseitige Freiraum (12) des Rundsteckverbinders (1') mit einer Vergussmasse derart vergossen ist, dass der Freiraum (12) in radialer Richtung vollständig und in axialer Richtung wenigstens in einer Umgebung um das anschlussseitige Ende des Kontaktträgers derart ausgefüllt ist, dass wenigstens freiliegende Bereiche (15) der elektrischen Leiter (8, 8') der Adern (7, 7') der Anordnung mehrerer Adern zwischen den elektrischen Kontakten (6, 6') des Rundsteckverbinders (1') und der äußeren Isolierhülle (20) der jeweiligen Ader (7, 7') vollständig von Vergussmasse umgeben sind.

## Claims

1. Circular plug-in connector (1') having a connection side (3) which is configured for arrangement at one end of an arrangement of at least two cores, and having a plug-in side (2) which is configured for establishing a connection to a corresponding mating plug-in connector, comprising at least one outer housing part (4), which has a preferred longitudinal axis, a multi-part or segmented contact carrier, which has at least two separate contact-carrier elements (5, 5', 5") or at least two contact-carrier segments for receiving at least one respective electrical contact, and a shield element (9),
wherein the outer housing part (4) has an inner cavity which extends through the outer housing part (4) from a plug-in-side end of the outer housing part (4) to a connection-side end of the outer housing part (4) along the preferred longitudinal axis,
the contact carrier is arranged in the inner cavity, and a clearance (12) is formed, as part of the inner cavity of the outer housing part (4), between the connection-side end of the contact carrier and the connection-side end of the outer housing part (4),
one or more axial elements (10) of the shield element (9) extend through between the contact-carrier elements (5, 5', 5") or the contact-carrier segments of the contact carrier at least partially in the axial direction, the shield element (9), in a region of the connection-side end of the contact carrier, runs all the way around the outside of the contact carrier and, at the same time, is in contact with an inner wall of the outer housing part (4) all the way around it, and, at least between the contact-carrier elements (5, 5', 5") or the contact-carrier segments of the contact carrier and the shield element (9) and also between the contact-carrier elements (5, 5', 5') or the contact-carrier segments of the contact carrier and the outer plug-in-connector housing (4), there are provided interspaces (19), as part of the inner cavity, which are open at least towards the clearance (12),
**characterized in that**, in the region of the connection-side end of the contact carrier, the shield element (9) has radial projections (17) which completely border the contact carrier at the outer side and which completely separate the clearance (12) and the interspaces (19) from one another spatially.

2. Method for arranging a circular plug-in connector (1') on an arrangement of multiple cores, comprising at least the steps of:
a. providing an arrangement of multiple cores (7, 7'), wherein, at the ends of the cores (7, 7'), the respective electrical conductor(s) (8, 8') are exposed to a small extent, and
providing a circular plug-in connector (1') having a connection side (3) which is configured for arrangement at one end of the arrangement of multiple cores, and having a plug-in side (2) which is configured for establishing a connection to a corresponding mating plug-in connector,
the circular plug-in connector (1') comprising at least one outer housing part (4), which has a preferred longitudinal axis, a multi-part or segmented contact carrier, which has at least two separate contact-carrier elements (5, 5', 5) or at least two contact-carrier segments for receiving at least one respective electrical contact (6, 6'), and a shield element (9),
wherein the outer housing part (4) has an inner cavity which extends through the outer housing part (4) from a plug-in-side end of the outer housing part (4) to a connection-side end of the outer housing part along the preferred longitudinal axis, the contact carrier is arranged in the inner cavity, and a clearance (12) is formed, as part of the inner cavity of the outer housing part (4), between the connection-side end of the contact carrier and the connection-side end of the outer housing part (4),
one or more axial elements (10) of the shield element (9) extend through between the contact-carrier elements (5, 5', 5") or the contact-carrier segments of the contact carrier at least partially in the axial direction, the shield element (9), in a region of the connection-side end of the contact carrier, runs all the way around the outside of the contact carrier and, at the same time, is in contact with an inner wall of the outer housing part (4) all the way around it, and, at least between the contact-carrier elements (5, 5', 5") or the contact-carrier segments of the contact carrier and the shield element (9) and also between the contact-carrier elements (5, 5', 5") or the contact-carrier segments of the contact carrier and the outer plug-in-connector housing (4), there are provided interspaces (19), as part of the inner cavity, which are open at least towards the clearance (12),
and wherein, in the region of the connection-side end of the contact carrier, the shield element (9) has radial projections (17) which completely border the contact carrier at the outer side and which completely separate the clearance (12) and the interspaces (19) from one another spatially,
b. connecting the electrical conductors (8, 8') of a respective core (7, 7') of the arrangement of multiple cores to an associated contact (6, 6') of the circular plug-in connector (1'),
c. potting the connection-side clearance (12) of the circular plug-in connector (1') with a potting compound in such a way that the clearance (12) is filled in the radial direction completely and in the axial direction at least in surroundings around the connection-side end of the contact carrier in such a way that at least exposed regions (15) of the electrical conductors (8, 8') of the cores (7, 7') of the arrangement of multiple cores are surrounded completely by potting compound between the electrical contacts (6, 6') of the circular plug-in connector (1') and the insulating sheath (20) of the respective core (7, 7').

3. Circular-plug-in-connector arrangement comprising an arrangement of multiple cores and a circular plug-in connector (1') according to Claim 1, **characterized in that** the respective electrical conductor(s) (8, 8') of the cores (7, 7') of the arrangement of multiple cores are connected to an associated contact (6, 6') of the plug-in connector (1'), and the connection-side clearance (12) of the circular plug-in connector (1') is potted with a potting compound in such a way that the clearance (12) is filled in the radial direction completely and in the axial direction at least in surroundings around the connection-side end of the contact carrier in such a way that at least exposed regions (15) of the electrical conductors (8, 8') of the cores (7, 7') of the arrangement of multiple cores are surrounded completely by potting compound between the electrical contacts (6, 6') of the circular plug-in connector (1') and the outer insulating sheath (20) of the respective core (7, 7').

## Revendications

1. Connecteur enfichable rond (1') comprenant un côté raccordement (3) configuré pour être disposé à une extrémité d'un arrangement d'au moins deux fils et un côté fiche (2) configuré pour établir une connexion avec une fiche homologue correspondante,
comprenant au moins une partie de boîtier extérieure (4) avec un axe longitudinal préférentiel, un porte-contact en plusieurs parties ou segmenté avec au moins deux éléments de porte-contact séparés (5, 5', 5") ou au moins deux segments de porte-contact destinés à recevoir au moins un contact électrique respectif et un élément de blindage (9),
la partie de boîtier extérieure (4) possédant un espace creux intérieur qui s'étend le long de l'axe longitudinal préférentiel depuis une extrémité côté fiche de la partie de boîtier extérieure (4) jusqu'à une extrémité côté raccordement de la partie de boîtier extérieure (4) à travers la partie de boîtier extérieure (4),
le porte-contact étant disposé dans l'espace creux intérieur et un espace libre (12) étant formé entre l'extrémité côté raccordement du porte-contact et l'extrémité côté raccordement de la partie de boîtier extérieure (4) en tant que partie de l'espace creux intérieur de la partie de boîtier extérieure (4),
un ou plusieurs éléments axiaux (10) de l'élément de blindage (9) s'étendant au moins partiellement dans la direction axiale entre les éléments de porte-contact (5, 5', 5") ou les segments de porte-contact du porte-contact, l'élément de blindage (9) entourant complètement le porte-contact à l'extérieur dans une zone de l'extrémité côté raccordement du porte-contact et étant en même temps en contact avec une paroi intérieure de la partie de boîtier extérieure (4) sur tout son pourtour et des espaces intermédiaires (19) en tant que partie de l'espace creux intérieur ouverts au moins vers l'espace libre (12) étant présents au moins entre les éléments de porte-contact (5, 5', 5") ou les segments de porte-contact du porte-contact et l'élément de blindage (9) ainsi qu'entre les éléments de porte-contact (5, 5', 5') ou les segments de porte-contact du porte-contact et le boîtier de fiche extérieur (4),
**caractérisé en ce que** l'élément de blindage (9) présente, dans la zone de l'extrémité côté raccordement du porte-contact, des saillies radiales (17) qui bordent complètement le porte-contact du côté extérieur et séparent complètement l'espace libre (12) et les espaces intermédiaires (19) les uns des autres.

2. Procédé pour disposer un connecteur enfichable rond (1') sur un arrangement de plusieurs fils, comprenant au moins les étapes consistant à :
a. prévoir un arrangement de plusieurs fils (7, 7'), le ou les conducteurs électriques (8, 8') respectifs étant partiellement exposés au niveau des extrémités des fils (7, 7'), et
prévoir un connecteur enfichable rond (1') comprenant un côté raccordement (3) configuré pour être disposé à une extrémité de l'arrangement de plusieurs fils et un côté fiche (2) configuré pour établir une connexion avec une fiche homologue correspondante,
le connecteur enfichable rond (1') comprenant au moins une partie de boîtier extérieure (4) avec un axe longitudinal préférentiel, un porte-contact en plusieurs parties ou segmenté avec au moins deux éléments de porte-contact séparés (5, 5', 5") ou au moins deux segments de porte-contact destinés à recevoir au moins un contact électrique (6, 6') respectif et un élément de blindage (9),
la partie de boîtier extérieure (4) possédant un espace creux intérieur qui s'étend le long de l'axe longitudinal préférentiel depuis une extrémité côté fiche de la partie de boîtier extérieure (4) jusqu'à une extrémité côté raccordement de la partie de boîtier extérieure à travers la partie de boîtier extérieure (4), le porte-contact étant disposé dans l'espace creux intérieur et un espace libre (12) étant formé entre l'extrémité côté raccordement du porte-contact et l'extrémité côté raccordement de la partie de boîtier extérieure (4) en tant que partie de l'espace creux intérieur de la partie de boîtier extérieure (4),
un ou plusieurs éléments axiaux (10) de l'élément de blindage (9) s'étendant au moins partiellement dans la direction axiale entre les éléments de porte-contact (5, 5', 5") ou les segments de porte-contact du porte-contact, l'élément de blindage (9) entourant complètement le porte-contact à l'extérieur dans une zone de l'extrémité côté raccordement du porte-contact et étant en même temps en contact avec une paroi intérieure de la partie de boîtier extérieure (4) sur tout son pourtour et des espaces intermédiaires (19) en tant que partie de l'espace creux intérieur ouverts au moins vers l'espace libre (12) étant présents au moins entre les éléments de porte-contact (5, 5', 5") ou les segments de porte-contact du porte-contact et l'élément de blindage (9) ainsi qu'entre les éléments de porte-contact (5, 5', 5") ou les segments de porte-contact du porte-contact et le boîtier de fiche extérieur (4),
et l'élément de blindage (9) présentant, dans la zone de l'extrémité côté raccordement du porte-contact, des saillies radiales (17) qui bordent complètement le porte-contact du côté extérieur et séparent complètement l'espace libre (12) et les espaces intermédiaires (19) les uns des autres,
b. connecter les conducteurs électriques (8, 8') d'un fil (7, 7') respectif de l'arrangement de plusieurs fils à un contact (6, 6') associé du connecteur enfichable rond (1'),
c. encapsuler l'espace libre (12) côté raccordement du connecteur enfichable rond (1') avec une masse de scellement de telle sorte que l'espace libre (12) soit rempli complètement dans la direction radiale et, dans la direction axiale, au moins dans un environnement autour de l'extrémité côté raccordement du porte-contact, de telle sorte qu'au moins les zones exposées (15) des conducteurs électriques (8, 8') des fils (7, 7') de l'arrangement de plusieurs fils entre les contacts électriques (6, 6') du connecteur enfichable rond (1') et la gaine isolante (20) du fil (7, 7') respectif sont entièrement entourées par la masse de scellement.

3. Arrangement connecteur enfichable rond, comprenant un arrangement de plusieurs fils et un connecteur enfichable rond (1') selon la revendication 1, **caractérisé en ce que** le ou les conducteurs électriques (8, 8') respectifs des fils (7, 7') de l'arrangement de plusieurs fils sont reliés à un contact (6, 6') associé du connecteur enfichable rond (1') et l'espace libre (12) côté raccordement du connecteur enfichable rond (1') est encapsulé avec une masse de scellement de telle sorte que l'espace libre (12) est complètement rempli dans la direction radiale et, dans la direction axiale, au moins dans un environnement autour de l'extrémité côté raccordement du porte-contact, de telle sorte qu'au moins des zones exposées (15) des conducteurs électriques (8, 8') des fils (7, 7') de l'arrangement de plusieurs fils entre les contacts électriques (6, 6') du connecteur enfichable rond (1') et la gaine isolante (20) extérieure du fil (7, 7') respectif sont entièrement entourées par la masse de scellement.
